# EUROPÄISCHE PATENTSCHRIFT

(11) **EP 0 651 157 B1**
(45) Veröffentlichungstag und Bekanntmachung des Hinweises auf die Patenterteilung: **11.09.1996**
(21) Anmeldenummer: 94116383.4
(22) Anmeldetag: 18.10.1994
(51) Int. Cl.: F02N 11/08, F02D 41/30

(54) **Startschalterstromkreis für einen Motor**
Current circuit for starter commutator of an engine
Circuit de courant pour commutateur de démarrage d'un moteur

(30) Priorität: 29.10.1993 US 145363
(43) Veröffentlichungstag der Anmeldung: 03.05.1995
(73) Patentinhaber: DEERE & COMPANY, Moline, Illinois 61265 (US)
(72) Erfinder: Haddick, Brian James, Beaver Dam, Wisconsin 53916 (US); Peterson, Rudolph Andrew, Jr., Horicon, Wisconsin 53032 (US)
(74) Vertreter: Feldmann, Bernhard

(56) Entgegenhaltungen:
- PATENT ABSTRACTS OF JAPAN vol. 16, no. 363 (M-1290) 5. August 1992 & JP-A-04 112 945 (HITACHI) 14. April 1992

## Beschreibung

Die Erfindung bezieht sich auf einen Startschalterstromkreis für einen Motor mit einem an eine Stromquelle angeschlossenen Startschalter, einem Zustandsschalter, der bei Erreichen einer bestimmten Bedingung anspricht, und mit einer elektrischen Betätigungsvorrichtung, die während des Startvorgangs für eine Kraftstoffzufuhr aktivierbar ist.

Insbesondere bei Dieselfahrzeugen kann der Motor in der Regel nur abgestellt werden, wenn die Kraftstoffzufuhr unterbrochen wird. Hierzu dienen sogenannte elektrische Betätigungsvorrichtungen oder Abstelleinrichtungen, die die Kraftstoffzufuhr unterbinden, im Kraftstoffsystem vorgesehen sind und mit der Kraftstoffpumpe zusammen arbeiten können. Eine bekannte Abstelleinrichtung besteht aus einem stromdurchflossenen Solenoid mit einer Haltewicklung mit Windungen aus dünnem Draht und einer Einzugswicklung mit Windungen aus dickem Draht. Bei ausgestelltem Startschalter ist die Brennstoffleitung durch ein Sperrglied blockiert. Dieses wird für den Fahrbetrieb so betätigt oder verstellt, daß eine ungehinderte Brennstoffzufuhr möglich ist. Beim Starten des Motors, bei dem sich der Startschalter in seiner Startstellung befindet, wird die Einzugswicklung erregt und es fließt ein starker Strom von der Batterie durch das Solenoid. Die daraus resultierende Ankerbewegung löst das Sperrglied, das nachfolgend durch die Haltewicklung bei einer dann nicht mehr stromführenden Einzugswicklung in seiner Offenstellung gehalten wird. Hierzu ist nur ein schwacher Stromfluß erforderlich, der andauert, solange der Startschalterkreis geschlossen ist, was der Fall ist, wenn sich der Startschalter in seiner Start- oder in seiner Betriebsstellung befindet.

Im Falle, daß die Einzugswicklung direkt mit der Startklemme des Startschalters verdrahtet ist, kann es zu Überhitzungen, zum Durchbrennen und damit zum Ausfall des Solenoids kommen, wenn ein den Startschalter betätigender Schlüssel zu lange in der Startstellung des Startschalters festgehalten wird oder, wenn der Startschalter in seiner Startstellung hängen bleiben sollte (Z.B. JP-A-04 112 945).

Um Überhitzungen zu vermeiden, ist bereits die Verwendung eines Zeitschalters vorgeschlagen worden, was aber mit einem zusätzlinicht unerheblichen Aufwand verbunden und damit teuer ist.

Andererseits sind moderne Motoren mit einer Vielzahl von Kontrollanzeigen versehen, die der Bedienungsperson Aufschluß über den Zustand des Motors geben sollen, weshalb nach der Erfindung die Stromzufuhr zu der elektrischen Betätigungsvorrichtung zur Vermeidung von Überhitzungen automatisch unterbrochen werden soll, wenn der Motor einen bestimmten Zustand, wie Betriebstemperatur, Drehzahl usw. erreicht hat. Hierzu sieht die Erfindung vor, daß der Stromfluß durch die Betätigungsvorrichtung durch einen Relais gesteuerten Schalter unterbrechbar ist, wobei die eine Seite der Spule des Relais an den Startschalter und die andere Seite der Spule an den Eingang des Zustandsschalters angeschlossen ist. Ein solcher Kreis ist sehr einfach, zuverlässig und auch nicht teuer.

Für einen Startschalterstromkreis, bei dem der Zustandsschalter ein Druckschalter ist und bei Erreichen eines vorherbestimmten Öldruckes öffnet, und bei dem die elektrische Betätigungsvorrichtung ein Solenoid mit einer Einzugswicklung ist, kann nach der Erfindung vorgesehen werden, daß der Relais gesteuerte Schalter eine erste Klemme, die mit der Einzugswicklung des Solenoids verbunden ist, und eine zweite Klemme aufweist, die an die Stromquelle angeschlossen ist, und die erste und zweite Klemme miteinander verbindet, wenn der Druckschalter und der Startschalterstromkreis geschlossen sind. Fast allen Motoren ist eine Öldruckkontrollampe zugeordnet, die ausgeht, wenn der Motor den erforderlichen Öldruck erreicht hat. Bei einem warmen Motor erfolgt dies in Sekundenbruchteilen, bei einem Kaltstart dauert der Druckaufbau etwas länger. Der Stromkreis für die Öldruckkontrollampe führt in der Regel von dem Startschalter über die Ahzeigelampe und den Druckschalter zu der als Masse dienenden Öldruckwanne, die eine Membrane aufweist, die, wenn sich der Öldruck aufbaut, nach oben gedrückt wird und den Druckschalter öffnet, worauf der Stromkreis unterbrochen wird und die Anzeigelampe erlischt. Durch die erfindungsgemäß vorgeschlagene Verdrahtung wird bei einem Öffnen des Druckschalters das Relais deaktiviert und sein Schalter wird sich öffnen, wodurch die Stromzuführung zu der Einzugswicklung unterbrochen wird. Damit wird in besonders einfacher aber wirkungsvoller Weise ein Überhitzen des Solenoids vermieden, wenn der Startschalter zulange in seiner Startstellung verbleiben sollte.

Fast jeder Motor ist heute mit einem elektrisch betätigbaren Starter versehen, weshalb ferner die zweite Klemme des Relais gesteuerten Schalters mit dem Starter verbunden sein kann. Dies ist besonders dann von Vorteil, wenn als Zustandsschalter der Öldruckschalter Verwendung findet. Letzterer kann sich nämlich im Betrieb wieder schließen, wenn der Öldruck auf einen bestimmten Wert absinkt. Dennoch wird bei einem derartigen Vorgang die Einzugswicklung nicht erregt, da dann der Starterstromkreis nicht geschlossen ist, was nur für den Startvorgang erfolgt.

Bei einem Startschalterstromkreis mit einem Starter und mit einem Startereinrückrelais kann alternativ die zweite Klemme des Relais gesteuerten Schalters mit dem Startereinrückrelais verbunden sein.

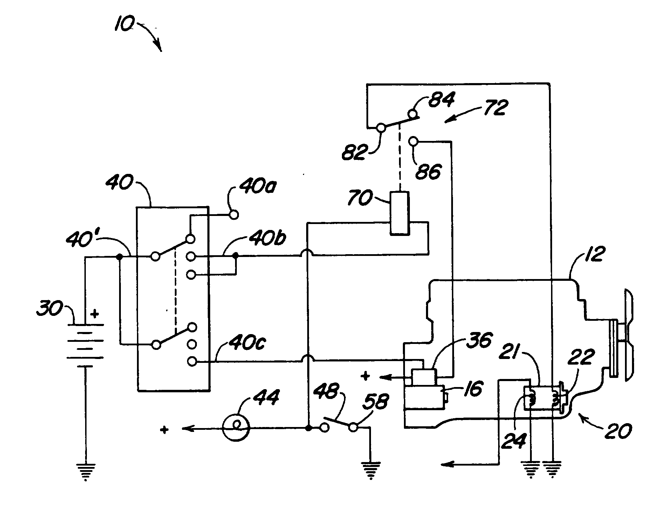

In der einzigen Figur ist ein Ausführungsbeispiel der Erfindung dargestellt.

Ein als Startschalterkreis ausgebildeter Stromkreis 10 dient zum Anlassen eines Dieselmotors 12, der mit einem Starter 16 und einem Dieselkraftstoffsystem 20 mit einer elektrischen Abstellvorrichtung 21 versehen ist. In der einzigen Figur ist von dem Kraftstoffsystem an sich nur die Abstellvorrichtung 21 teilweise eingezeichnet, die eine Einziehspule 22 und eine Haltespule 24 aufweist. Sobald diese stromlos werden, insbesondere dann, wenn der Startschalter in seine Stellung Aus verstellt wird, wird die Brennstoffzufuhr zu dem Motor unterbrochen. Der Stromkreis 10 wird durch eine Batterie 30 oder dergleichen gespeist, und der Starter 16 ist in bekannter Weise mit einem Startereinrückrelais 36 ausgestattet. Der Startschalter 40 ist ein herkömmlicher Dreistellungsschalter mit einer Abstellstellung oder Stellung Aus (Klemme 40a), einer Betriebsstellung (Klemme 40b), einer Startstellung (Klemme 40c) und mit einer an die Batterie angeschlossenen Eingangsklemme 40'. Das Startereinrückrelais 36 ist mit der Klemme 40c des Startschalters 40 verdrahtet.

Eine Öldruckkontrollampe 44 ist mit einer Seite an die Batterie 30 und mit ihrer anderen Seite an einen normalerweise geschlossenen Druckschalter 48 angeschlossen, der bei 58 an Masse anliegt. Der Druckschalter 48 öffnet und die Öldruckkontrollampe wird ausgeschaltet, wenn der Öldruck im Motor einen vorherbestimmten Wert erreicht hat, d. h. solange der Öldruck den vorherbestimmten Wert nicht erreicht hat, bleibt der Druckschalter 48 geschlossen.

Die beiden der Betriebsstellung zugeordneten Klemmen 40b sind mit der einen Seite einer Spule 70 eines Relais 72 verdrahtet, während die andere Seite der Spule 70 an den Druckschalter 48 bzw. an einen Anschluß angeschlossen ist, der zwischen der Öldruckkontrollampe 44 und dem Druckschalter 48 liegt. Auf diese Weise entsteht zur Spule 70 eine stromführende Verbindung, wenn sich der Startschalter 40 in seiner Betriebsstellung oder in seiner Startstellung befindet und der Öldruck den vorherbestimmten Wert noch nicht erreicht hat bzw. bei geschlossenem Schalter 48. Der Schalter des Relais 72 wiederum ist mit einer Seite (Klemme 82) an die Einziehspule 22, die an Masse anliegt, angeschlossen, während die andere Seite des Relaisschalters bei nicht angezogenem Relais gegen eine nicht verdrahtete Klemme 84 und bei stromführender Spule 70 gegen eine Klemme 86 zur Anlage kommt, die mit dem Startereinrückrelais 36 verbunden ist. Alternativ kann die Klemme 86 auch unmittelbar an die Klemme 40c des Startschalters 40 angeschlossen sein. In jedem Fall wird eine Verbindung mit der Batterie 30 entstehen, wenn sich der Startschalter 40 in seiner Startstellung (Klemme 40c) befindet. Ist nun der Startschalter 40 in seiner Startstellung 40c oder in seiner Betriebsstellung 40b und ist der Öldruckschalter 48 noch geschlossen, dann wird das Relais 72 aktiviert und der Stromkreis zwischen dem Startereinrückrelais 36 oder der Klemme 40c über die Klemmen 86, 84 und die Einziehspule 22, die an Masse anliegt, geschlossen. Ein starker Strom kann jetzt von der Batterie 30 zu der Einziehspule 22 fließen, wodurch die elektrische Abstellvorrichtung 21 derart aktiviert wird, daß Brennstoff zu dem Motor 12 gelangen kann. Sobald die elektrische Abstellvorrichtung 21 bzw. deren Solenoid aktiviert ist und der Stromkreis zu der Einziehspule 22 bzw. zu der Einzugswicklung des zugehörigen Solenoids unterbrochen wird, fließt dennoch ein relativ schwacher Strom zu der Haltespule 24 der elektrischen Abstellvorrichtung 21 bzw. zu der Haltewicklung des zugehörigen Solenoids, solange sich der Startschalter 40 in seiner Startstellung oder Betriebsstellung befindet, da die Haltewicklung an die Batterie 30 und an Masse angeschlossen ist.

Der Stromfluß durch die Haltewicklung dauert solange an, wie der Startschalterkreis geschlossen ist, während der relativ starke Stromfluß durch die Einzugswicklung nur von kurzer Dauer ist, da der Druckschalter 48 öffnet, sobald der Öldruck den vorherbestimmten Wert erreicht hat. Durch das Öffnen des Druckschalters 48 wird der Stromfluß durch die Spule 70 des Relais 72 unterbrochen, das Relais 72 deaktiviert und der Stromfluß durch die Einziehspule 22 ebenfalls unterbrochen. Auf diese Weise wird die Stromentnahme aus der Batterie während des Startens reduziert, da der Druckschalter bei warmem Motor bereits öffnet, nachdem der Motor einige Male umgelaufen ist, was in der Regel weniger als 1 sek ist. Bei einem Kaltstart öffnet der Druckschalter 48 etwas später. In jedem Fall wird aber ein Überhitzen der Einzugswicklung vermieden, auch dann, wenn der Startschalter 40 in seiner Startstellung hängenbleiben oder der Starter 16 aus irgendeinem Grund stromführend bleiben sollte.

## Patentansprüche

1. Startschalterstromkreis für einem Motor (12) mit einen an eine Stromquelle (30) angeschlossenen Startschalter (40), einem Zustandsschalter (48), der bei Erreichen einer bestimmten Bedingung anspricht, und mit einer elektrischen Betätigungsvorrichtung, die während des Startvorgangs für eine Kraftstoffzufuhr aktivierbar ist, dadurch gekennzeichnet, daß der Stromfluß durch die Betätigungsvorrichtung (21) durch einen Relais (72) gesteuerten Schalter unterbrechbar ist, wobei die eine Seite der Spule (70) des Relais (72) an den Startschalter (40) und die andere Seite der Spule (70) an den Eingang des Zustandsschalters (48) angeschlossen ist.

2. Startschalterstromkreis nach Anspruch 1, wobei der Zustandsschalter ein Druckschalter (48) ist und bei Erreichen eines vorherbestimmten Öldruckes öffnet, und die elektrische Betätigungsvorrichtung ein Solenoid (21) mit einer Einzugswicklung ist, dadurch gekennzeichnet, daß der Relais gesteuerte Schalter eine erste Klemme (82), die mit der Einzugswicklung des Solenoids (21) verbunden ist, und eine zweite Klemme (86) aufweist, die an die Stromquelle (30) angeschlossen ist, und die erste und zweite Klemme (82, 86) miteinander verbindet, wenn der Druckschalter (48) und der Startschalterstromkreis (10) geschlossen sind.

3. Startschalterstromkreis nach Anspruch 2, wobei der Motor ein Dieselmotor (12) ist und mit einem elektrisch betätigbaren Starter (16) versehen ist, dadurch gekennzeichnet, daß die zweite Klemme (86) des Relais (72) gesteuerten Schalters mit dem Starter (16) verbunden ist.

4. Startschalterstromkreis nach Anspruch 2, wobei der Motor ein Dieselmotor (12) ist und mit einem Starter (16) und mit einem Startereinrückrelais (36) versehen ist, dadurch gekennzeichnet, daß die zweite Klemme (86) des Relais (72) gesteuerten Schalters mit dem Startereinrückrelais (36) verbunden ist.

## Claims

1. Ignition switch circuit for an engine (12) with an ignition switch (40) connected to a power supply (30), a status switch (48), which responds on attaining a certain condition, and with an electrical operating device, which can be activated during the start-up process for the supply of fuel, characterised in that the current flow through the operating device (21) can be interrupted by a switch controlled by a relay (72), one side of the coil (70) of the relay (72) being connected to the ignition switch (40) and the other side of the coil (70) being connected to the input of the status switch (48).

2. Ignition switch circuit according to Claim 1, the status switch being a pressure-activated switch (48) and opening on attaining a predetermined oil pressure, and the electrical operating device being a solenoid (21) with a pull-in coil, characterised in that the relay-controlled switch comprises a first terminal (82), which is connected to the pull-in coil of the solenoid (21), and a second terminal (86), which is connected to the power supply (30), and connects the first and second terminal (82, 86) to one another when the pressure switch (48) and the ignition switch circuit (10) are closed.

3. Ignition switch circuit according to Claim 2, the engine being a diesel engine (12) and being provided with an electrically operable starter (16), characterised in that the second terminal (86) of the switch controlled by relay (72) is connected to the starter (16).

4. Ignition switch circuit according to Claim 2, the engine being a diesel engine (12) and being provided with a starter (16) and with a starter engagement relay (36), characterised in that the second terminal (86) of the switch controlled by relay (72) is connected to the starter engagement relay (36).

## Revendications

1. Circuit de commutateur de démarrage pour un moteur (12), comportant un commutateur de démarrage (40) raccordé à une source de courant (30), un interrupteur d'état (48), qui répond lorsqu'une condition déterminée est satisfaite, et un dispositif d'actionnement électrique qui peut être activé pendant le processus de démarrage pour un envoi de carburant, caractérisé en ce que le flux de courant traversant le dispositif d'actionnement (21) peut être interrompu par un interrupteur commandé par un relais (72), un côté de la bobine (70) du relais (72) étant connecté au commutateur de démarrage (40) et l'autre côté de la bobine (70) étant connectée à l'entrée de l'interrupteur d'état (48).

2. Circuit de commutateur de démarrage selon la revendication 1, dans lequel l'interrupteur d'état est un interrupteur à bouton-poussoir (48) et s'ouvre lorsqu'une pression d'huile prédéterminée est atteinte, et le dispositif d'actionnement électrique est un électroaimant (21) comportant un enroulement d'attraction, caractérisé en ce que l'interrupteur commandé par le relais possède une première borne (82), qui est reliée à l'enroulement d'attraction de l'électroaimant (21), et une seconde borne (86), qui est connectée à la source de courant (30) et relie entre elles les première et seconde bornes (82,86), lorsque l'interrupteur à bouton-poussoir (48) et le circuit (10) du commutateur de démarrage sont fermés.

3. Circuit de commutateur de démarrage selon la revendication 2, dans lequel le moteur est un moteur diesel (12) et est équipé d'un interrupteur (16) pouvant être actionné électriquement, caractérisé en ce que la seconde borne (86) de l'interrupteur commandé par le relais (72) est reliée à l'interrupteur (16).

4. Circuit de commutateur de démarrage selon la revendication 2, dans lequel le moteur est un moteur diesel (12) et est équipé d'un démarreur (16) et d'un relais de démarrage (36), caractérisé en ce que la seconde borne (86) de l'interrupteur commandé par le relais (72) est relié au relais de démarrage (36).
